(19) Europäisches Patentamt
European Patent Office
Office européen des brevets

(11) **EP 4 696 580 A1**

(12) **EUROPEAN PATENT APPLICATION**
published in accordance with Art. 153(4) EPC

(43) Date of publication:
**18.02.2026 Bulletin 2026/08**

(51) International Patent Classification (IPC):
***B60W 40/109*** *(2012.01)*   ***B60W 50/00*** *(2006.01)*

(21) Application number: **24795605.5**

(22) Date of filing: **06.03.2024**

(86) International application number:
**PCT/CN2024/080381**

(87) International publication number:
**WO 2024/222218 (31.10.2024 Gazette 2024/44)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **28.04.2023  CN 202310493324**

(71) Applicants:
• **Zhejiang Geely Holding Group Co., Ltd.
Hangzhou, Zhejiang 310051 (CN)**
• **Geely Automobile Research Institute
(Ningbo) Co., Ltd.
Ningbo, Zhejiang 315336 (CN)**

(72) Inventors:
• **ZHANG, Lunwei
Hangzhou, Zhejiang 310051 (CN)**
• **XU, Zhongyi
Hangzhou, Zhejiang 310051 (CN)**
• **XU, Fei
Hangzhou, Zhejiang 310051 (CN)**
• **LI, Guiyu
Hangzhou, Zhejiang 310051 (CN)**
• **MA, Zhenqiang
Hangzhou, Zhejiang 310051 (CN)**

(74) Representative: **Range, Christopher William
Withers & Rogers LLP
2 London Bridge
London SE1 9RA (GB)**

(54) **VEHICLE, LATERAL VELOCITY ESTIMATION METHOD AND APPARATUS THEREFOR, AND STORAGE MEDIUM**

(57)    Provided are a vehicle, a method and an apparatus for estimating a lateral velocity for same, and a storage medium. The method includes: obtaining road surface information of a road surface where the vehicle is located and operating information of the vehicle; estimating a center of mass sideslip angle, a longitudinal velocity, and a yaw rate of the vehicle based on the road surface information, the operating information, and a nonlinear vehicle model; and determining the lateral velocity of the vehicle based on the center of mass sideslip angle, the longitudinal velocity, and the yaw rate.

FIG. 1

EP 4 696 580 A1

**Description**

**CROSS-REFERENCE TO RELATED APPLICATION**

This application claims priority to Chinese patent application No. 202310493324.2, titled "VEHICLE, METHOD AND APPARATUS FOR ESTIMATING LATERAL VELOCITY FOR SAME, AND STORAGE MEDIUM", and filed on April 28, 2023, the entire contents of which are incorporated herein by reference.

**FIELD**

The present disclosure relates to the field of vehicle technologies, and more particularly, to a method for estimating a lateral velocity of a vehicle, a computer-readable storage medium, a vehicle, and an apparatus for estimating a lateral velocity of a vehicle.

**BACKGROUND**

With the rapid development of automobile intelligence, there are more and more chassis electronic control systems, such as steer-by-wire, rear-wheel steering, active suspension, electronically controlled dampers, and in-wheel motor drive systems. For steer-by-wire chassis systems, a primary control objective is to obtain important parameters such as a current state of a vehicle. Accuracy of estimating these parameters greatly determines an effect of vehicle dynamics control.

For a chassis domain control system, an execution control unit can not only achieve rapid response, but also can be an information unit of the vehicle, which breaks a basic method that a traditional power system can only rely on an inertial sensor and a reference wheel speed for vehicle parameter estimation. Currently, a lateral velocity estimation method for the traditional power system limits vehicle dynamics control under corresponding operation conditions due to limitation of signal obtaining and insufficient accuracy of state estimation.

**SUMMARY**

The present disclosure aims to solve at least one of the technical problems in the related art to some extent. Therefore, a first embodiment of the present disclosure is to provide a method for estimating a lateral velocity of a vehicle. In the method, after obtaining road surface information of a road surface where the vehicle is located and operating information of the vehicle, a center of mass sideslip angle, a longitudinal velocity, and a yaw rate of the vehicle are estimated based on the road surface information, the operating information, and a nonlinear vehicle model. Then, the lateral velocity of a vehicle is determined based on the estimated center of mass sideslip angle, the estimated longitudinal velocity, and the estimated yaw rate of the vehicle. In this way, accuracy of determining the lateral velocity of the vehicle under complex operation conditions can be improved, and a computational efficiency can be enhanced.

A second embodiment of the present disclosure is to provide a computer-readable storage medium.

A third embodiment of the present disclosure is to provide a vehicle.

A fourth embodiment of the present disclosure is to provide an apparatus for estimating a lateral velocity of a vehicle.

To achieve the above embodiments, in a first aspect, an embodiment of the present disclosure provides a method for estimating a lateral velocity of a vehicle. The method includes: obtaining road surface information of a road surface where the vehicle is located and operating information of the vehicle; estimating a center of mass sideslip angle, a longitudinal velocity, and a yaw rate of the vehicle based on the road surface information, the operating information, and a nonlinear vehicle model; and determining the lateral velocity of the vehicle based on the center of mass sideslip angle, the longitudinal velocity, and the yaw rate.

With the method for estimating the lateral velocity of the vehicle according to the embodiment of the present disclosure, the road surface information of the road surface where the vehicle is located and the operating information of the vehicle are obtained. Then, the center of mass sideslip angle, the longitudinal velocity, and the yaw rate of the vehicle are estimated based on the road surface information, the operating information, and a nonlinear vehicle model. Finally, the lateral velocity of the vehicle is determined based on the center of mass sideslip angle, the longitudinal velocity, and the yaw rate. By this method, the accuracy of determining the lateral velocity under complex operation conditions can be improved, and the computational efficiency can be enhanced.

In addition, the method for estimating the lateral velocity of the vehicle according to the above embodiments of the present disclosure can further have the following additional technical features.

According to some embodiments of the present disclosure, the road surface information includes a road surface slope, and the operating information includes a front wheel steering angle and a rear wheel steering angle of the vehicle.

According to some embodiments of the present disclosure, the estimating the center of mass sideslip angle, the longitudinal velocity, and the yaw rate of the vehicle based on the road surface information, the operating information, and the nonlinear vehicle model includes: determining a state-space equation corresponding to the nonlinear vehicle model; and estimating the center of mass sideslip angle, the longitudinal velocity, and the yaw rate of the vehicle using an extended Kalman filter method based on the road surface information, the operating information, and the state-space equation.

According to some embodiments of the present disclosure, the state-space equation includes a state equation and a measurement equation. The state equation is expressed by the following formulas:

$$
\begin{bmatrix} \dot{\beta} \\ \dot{\gamma} \end{bmatrix} = \begin{bmatrix} -\dfrac{C_f + C_r}{mv_x} & \dfrac{C_r l_r - C_f l_f}{mv_x^2} - 1 \\ -\dfrac{C_f l_f - C_r l_r}{I_{zz}} & -\dfrac{C_f l_f^2 + C_r l_r^2}{I_{zz} v_x} \end{bmatrix} \begin{bmatrix} \beta \\ \gamma \end{bmatrix} + \begin{bmatrix} \dfrac{C_f}{mv_x} & \dfrac{C_r}{mv_x} \\ \dfrac{C_f l_f}{I_{zz}} & -\dfrac{C_r l_r}{I_{zz}} \end{bmatrix} \begin{bmatrix} \delta_f \\ \delta_r \end{bmatrix} + \begin{bmatrix} -g\sin(\text{Slope}) \\ 0 \end{bmatrix},
$$

$$
\dot{\omega} = C_1\omega + C_2\beta - C_3\delta_f,
$$

$$
\dot{\beta} = C_4\omega + C_5\beta - C_6\delta_f,
$$

$$
\dot{v}_x = \omega\beta v_x + a_x,
$$

where $\dot{\beta}$ is a derivative of the center of mass sideslip angle, $\dot{\gamma}$ is a derivative of a wheel camber angle, $C_f$ is a cornering stiffness of a front axle, $C_r$ is a cornering stiffness of a rear axle, m is a total mass of the vehicle, $v_x$ is the longitudinal velocity, $l_f$ is a distance from a center of mass to the front axle, $l_r$ is a distance from the center of mass to the rear axle, $I_{zz}$ is a yaw moment of inertia of the vehicle about a z-axis, $\beta$ is the center of mass sideslip angle, $\gamma$ is the wheel camber angle, $\delta_f$ is a front wheel steering angle, $\delta_r$ is a rear wheel steering angle, g is a gravitational acceleration, Slope is a road surface slope, $\dot{v}_x$ is a derivative of the longitudinal velocity, $\dot{\omega}$ is a derivative of the yaw rate, $C_1$, $C_2$, $C_3$, $C_4$, $C_5$, and $C_6$ are coefficients, $\omega$ is the yaw rate, $a_x$ is a longitudinal acceleration, and $a_y$ is a lateral acceleration.

According to some embodiments of the present disclosure, the measurement equation is expressed by the following formula:

$$
\begin{bmatrix} a_y \\ \gamma \end{bmatrix} = \begin{bmatrix} \dfrac{C_f + C_r}{m} & \dfrac{C_r l_r - C_f l_f}{mv_x} \\ 0 & 1 \end{bmatrix} \begin{bmatrix} \beta \\ \gamma \end{bmatrix} + \begin{bmatrix} -\dfrac{C_f}{m} & -\dfrac{C_r}{m} \\ 0 & 0 \end{bmatrix} \begin{bmatrix} \delta_f \\ \delta_r \end{bmatrix} + \begin{bmatrix} -g\sin(\text{Slope}) \\ 0 \end{bmatrix},
$$

where $a_y$ is the lateral acceleration, $\gamma$ is the wheel camber angle, $C_f$ is the cornering stiffness of the front axle, $C_r$ is the cornering stiffness of the rear axle, m is the total vehicle mass, $l_f$ is the distance from the center of mass to the front axle, $l_r$ is the distance from the center of mass to the rear axle, $\beta$ is the center of mass sideslip angle, $\delta_f$ is the front wheel steering angle, $\delta_r$ is the rear wheel steering angle, g is the gravitational acceleration, and Slope is the road surface slope.

According to some embodiments of the present disclosure, the method for estimating the lateral velocity of the vehicle further includes determining a tire slip angle based on the center of mass sideslip angle.

According to some embodiments of the present disclosure, the obtaining the road surface information of the road surface where the vehicle is located includes: obtaining image information of the road surface where the vehicle is located; and determining the road surface information of the road surface where the vehicle is located based on the image information and a tilt angle output by an inertial sensor disposed on the vehicle. The road surface information includes a road surface slope.

To achieve the above embodiments, in a second aspect, an embodiment of the present disclosure provides a computer-readable storage medium. The computer-readable storage medium has a program stored thereon. The program is configured to, when executed by a processor, implement the method for estimating the method for estimating the lateral velocity of the vehicle according to the above.

With the computer-readable storage medium according to the embodiment of the present disclosure, by implementing the above-described method for estimating the lateral velocity of the vehicle during execution, the accuracy of determining the lateral velocity of the vehicle under complex operation conditions can be improved, and the computational efficiency can be enhanced.

To achieve the above embodiment, in a third aspect, an embodiment of the present disclosure provides a vehicle. The vehicle includes: a memory; a processor; and a program stored on the memory and executable on the processor. The processor is configured to, when executing the program, implement the method for estimating the lateral velocity of the vehicle according to the above.

With the vehicle according to the embodiment of the present disclosure, by performing the method for estimating the lateral velocity of the vehicle described above, the accuracy of determining the lateral velocity of the vehicle under complex operation conditions can be improved, and the computational efficiency can be enhanced.

To achieve the above embodiment, in a fourth aspect, an embodiment of the present disclosure provides an apparatus for estimating a lateral velocity of a vehicle. The apparatus for estimating the lateral velocity of the vehicle includes: an obtaining module configured to obtain road surface information of the road surface where the vehicle is located and operating information of the vehicle; an estimation module configured to estimate a center of mass sideslip angle, a longitudinal velocity, and a yaw rate of the vehicle based on the road surface information, the operating information, and a nonlinear vehicle model; and a calculation module configured to determine a lateral velocity of the vehicle based on the center of mass sideslip angle, the longitudinal velocity, and the yaw rate.

With the apparatus for estimating the lateral velocity of the vehicle according to the embodiment of the present disclosure, the obtaining module is configured to obtain the road surface information of the road surface where the vehicle is located and the operating information of the vehicle. The estimation module is configured to estimate the center of mass sideslip angle, the longitudinal velocity, and the yaw rate of the vehicle based on the road surface information, the operating information, and the nonlinear vehicle model. The calculation module is configured to determine the lateral velocity of the vehicle based on the center of mass sideslip angle, the longitudinal velocity, and the yaw rate. Therefore, the apparatus can improve the accuracy of determining the lateral velocity of the vehicle under complex operation conditions, and improve the computational efficiency.

Additional aspects and advantages of the present disclosure will be provided at least in part in the following description, or will become apparent at least in part from the following description, or can be learned from practicing of the present disclosure.

## BRIEF DESCRIPTION OF THE DRAWINGS

FIG. 1 is a flowchart illustrating a method for estimating a lateral velocity of a vehicle according to an embodiment of the present disclosure.

FIG. 2 is a flowchart illustrating a method for estimating a lateral velocity of a vehicle according to a specific example of the present disclosure.

FIG. 3 is a block schematic diagram of a vehicle according to an embodiment of the present disclosure.

FIG. 4 is a block schematic diagram of an apparatus for estimating a lateral velocity of a vehicle according to an embodiment of the present disclosure.

## DETAILED DESCRIPTION

Embodiments of the present disclosure will be described in detail below with reference to examples thereof as illustrated in the accompanying drawings, throughout which same or similar elements, or elements having same or similar functions, are denoted by same or similar reference numerals. The embodiments described below with reference to the drawings are illustrative, and are intended to explain, rather than limiting, the embodiments of the present disclosure.

A method for estimating a lateral velocity of a vehicle, a computer-readable storage medium, a vehicle, and an apparatus for estimating a lateral velocity of a vehicle are described below with reference to the accompanying drawings.

A traditional state estimation method relies on an inertial sensor and a reference wheel speed to estimate vehicle parameters such as a lateral velocity of a center of mass. However, some unpredictable actual road conditions, such as a lateral force caused by a side slope and a yaw moment caused by changes in a friction coefficient, may cause deviations between an estimated result and an actual value. That is, robustness of road adhesion coefficient change is difficult to guarantee, and insufficient accuracy when estimating on sloped roads may occur. In addition, there are more and more chassis controllers, such as rear wheel steering, front wheel steer-by-wire, an in-wheel motor. Each system needs related state estimation when operating independently, which greatly wastes computing resources for state estimation with overlapping domains.

Therefore, the present disclosure provides a method for estimating a lateral velocity of a vehicle. The method can utilize the road information, such as by obtaining real-time suspension roll stiffness to distinguish a body roll angle caused by a road banking from a body roll angle caused by a lateral acceleration , or obtaining a real-time road friction coefficient estimation, and introducing the estimation result into a chassis lateral velocity estimation module for supplementation, thereby improving accuracy of state estimation under complex operation conditions, and coordinating input signals of each actuator to improve computational efficiency.

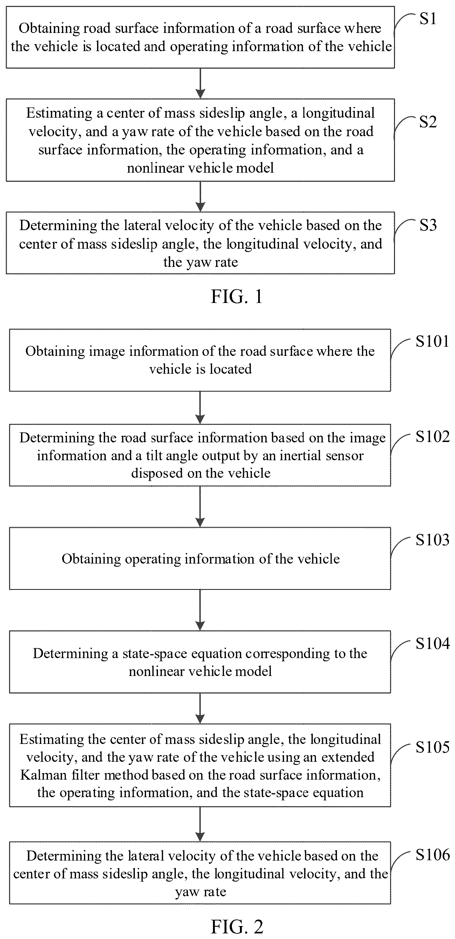

FIG. 1 is a flowchart illustrating a method for estimating a lateral velocity of a vehicle according to an embodiment of the present disclosure.

As illustrated in FIG. 1, the method for estimating the lateral velocity of the vehicle according to the embodiment of the present disclosure includes operations at blocks.

At block S1, road surface information of a road surface where the vehicle is located and operating information of the vehicle are obtained. The road surface information may include a road surface slope. The operating information may include a front wheel steering angle and a rear wheel steering angle of the vehicle.

At block S2, a center of mass sideslip angle, a longitudinal velocity, and a yaw rate of the vehicle are estimated based on the road surface information, the operating information, and a nonlinear vehicle model.

At block S3, the lateral velocity of the vehicle is determined based on the center of mass sideslip angle, the longitudinal velocity, and the yaw rate.

Specifically, the traditional state estimation method relies on the inertial sensor and the reference wheel speed to estimate vehicle parameters such as the lateral velocity. However, some unpredictable actual road conditions, such as the lateral force caused by the side slope and the yaw moment caused by changes in the friction coefficient, may cause deviations between the estimated result and the actual value. For example, during operation of the vehicle, road surface conditions may vary across different regions, and even within a same region, differences may arise due to construction activities. Therefore, when determining the vehicle's lateral velocity, the road information under current driving conditions can be obtained. For example, a vehicle-mounted camera can be used to capture images of the road surface. After obtaining the road image, image processing can be performed to calculate relevant road characteristics, such as road friction level, road gradient, and road roughness. In addition, when determining the vehicle's lateral velocity, the obtained lateral velocity varies depending on the current driving condition. For example, the calculated lateral velocity differs between straight-line driving and cornering of the vehicle. During obtaining the operating information of the vehicle, the front wheel steering angle and the rear wheel steering angle can be obtained by an angle sensor. When the vehicle turns, the lateral acceleration causes tires to experience lateral forces, resulting in tire sideslip. Therefore, the yaw moment is generated, which correspondingly produces the yaw rate and the center of mass sideslip angle.

After obtaining the road surface information and the operating information, a nonlinear vehicle model is constructed. In addition, the center of mass sideslip angle, the longitudinal velocity, and the yaw rate of the vehicle can be estimated based on the road surface information, the operating information, and the nonlinear vehicle model. After obtaining the center of mass sideslip angle, the longitudinal velocity, and the yaw rate of the vehicle, the lateral velocity of the vehicle can be determined based on the center of mass sideslip angle, the longitudinal velocity, and the yaw rate of the vehicle. For example, the vehicle's lateral velocity can be determined using corresponding calculation formulas, or based on a relationship between the center of mass sideslip angle, the longitudinal velocity, and the yaw rate, and the lateral velocity. Finally, combined with basic parameters of the vehicle, such as a vehicle mass, a vehicle wheelbase, a vehicle height, and driver inputs or intelligent driving control instructions, a chassis control target is formulated. In addition, a vehicle's stability boundary and a chassis execution ability are estimated. For example, when the lateral acceleration exceeds a linear range, a proportion of a steering wheel angle to a steering feedback torque is adjusted to control to the vehicle. Therefore, the accuracy of determining the lateral velocity of the vehicle under complex operation conditions can be improved, and the computational efficiency can be improved.

A specific workflow of a method for estimating a lateral velocity of a vehicle according to the present disclosure is described in detail below.

According to some embodiments of the present disclosure, the estimating the center of mass sideslip angle, the longitudinal velocity, and the yaw rate of the vehicle based on the road surface information, the operating information, and the nonlinear vehicle model includes: determining a state-space equation corresponding to the nonlinear vehicle model; and estimating the center of mass sideslip angle, the longitudinal velocity, and the yaw rate of the vehicle using an extended Kalman filter method based on the road surface information, the operating information, and the state-space equation.

Further, according to some embodiments of the present disclosure, the state-space equation includes a state equation and a measurement equation. The state equation is expressed by the following formulas:

$$\begin{bmatrix} \dot{\beta} \\ \dot{\gamma} \end{bmatrix} = \begin{bmatrix} -\dfrac{C_f + C_r}{mv_x} & \dfrac{C_r l_r - C_f l_f}{mv_x^2} - 1 \\ -\dfrac{C_f l_f - C_r l_r}{I_{zz}} & -\dfrac{C_f l_f^2 + C_r l_r^2}{I_{zz}v_x} \end{bmatrix} \begin{bmatrix} \beta \\ \gamma \end{bmatrix} + \begin{bmatrix} \dfrac{C_f}{mv_x} & \dfrac{C_r}{mv_x} \\ \dfrac{C_f l_f}{I_{zz}} & -\dfrac{C_r l_r}{I_{zz}} \end{bmatrix} \begin{bmatrix} \delta_f \\ \delta_r \end{bmatrix} + \begin{bmatrix} -g\sin(\text{Slope}) \\ 0 \end{bmatrix},$$

$$\dot{\omega} = C_1\omega + C_2\beta - C_3\delta_f,$$

$$\dot{\beta} = C_4\omega + C_5\beta - C_6\delta_f,$$

$$\dot{v}_x = \omega\beta v_x + a_x,$$

where $\dot{\beta}$ is a derivative of the center of mass sideslip angle, $\dot{\gamma}$ is a derivative of a wheel camber angle, $C_f$ is a cornering stiffness of a front axle, $C_r$ is a cornering stiffness of a rear axle, m is a total mass of the vehicle, $v_x$ is the longitudinal velocity, $l_f$ is a distance from a center of mass to the front axle, $l_r$ is a distance from the center of mass to the rear axle, $I_{zz}$ is a yaw moment of inertia of the vehicle about a z-axis, $\beta$ is the center of mass sideslip angle, $\gamma$ is the wheel camber angle, $\delta_f$ is a front wheel steering angle, $\delta_r$ is a rear wheel steering angle, g is a gravitational acceleration, Slope is a road surface slope, $\dot{v}_x$ is a derivative of the longitudinal velocity, $\dot{\omega}$ is a derivative of the yaw rate, $C_1$, $C_2$, $C_3$, $C_4$, $C_5$, and $C_6$ are coefficients, $\omega$ is the yaw rate, $a_x$ is a longitudinal acceleration, and $a_y$ is a lateral acceleration.

Further, according to some embodiments of the present disclosure, the measurement equation is expressed by the following formula:

$$\begin{bmatrix} a_y \\ \gamma \end{bmatrix} = \begin{bmatrix} \dfrac{C_f + C_r}{m} & \dfrac{C_r l_r - C_f l_f}{m v_x} \\ 0 & 1 \end{bmatrix} \begin{bmatrix} \beta \\ \gamma \end{bmatrix} + \begin{bmatrix} -\dfrac{C_f}{m} & -\dfrac{C_r}{m} \\ 0 & 0 \end{bmatrix} \begin{bmatrix} \delta_f \\ \delta_r \end{bmatrix} + \begin{bmatrix} -g\,sin(Slope) \\ 0 \end{bmatrix}$$

where $a_y$ is the lateral acceleration, $\gamma$ is the wheel camber angle, $C_f$ is the cornering stiffness of the front axle, $C_r$ is the cornering stiffness of the rear axle, m is the total vehicle mass, $l_f$ is the distance from the center of mass to the front axle, $l_r$ is the distance from the center of mass to the rear axle, $\beta$ is the center of mass sideslip angle, $\delta_f$ is the front wheel steering angle, $\delta_r$ is the rear wheel steering angle, g is the gravitational acceleration, and Slope is the road surface slope.

Specifically, when estimating the center of mass sideslip angle, the longitudinal velocity, and the yaw rate of the vehicle based on the road surface information, the operating information, and the nonlinear vehicle model, the state-space equation corresponding to the nonlinear vehicle model is determined. The nonlinear vehicle model includes a nonlinear vehicle dynamics model and a nonlinear tire dynamics model. The state-space equation corresponding to the nonlinear vehicle model may include the state equation and the measurement equation. The nonlinear vehicle model used in the present disclosure is built by introducing an additional degree of freedom for longitudinal velocity on the basis of a simple linear two-degree-of-freedom vehicle model. The nonlinear vehicle model has three degrees of freedom of the yaw rate, the center of mass sideslip angle, and the longitudinal velocity. The state-space equation corresponding to the model (the state equation and the measurement equation that are expressed by the above formulas) can be determined based on the model.

After obtaining the state-space equation, the center of mass sideslip angle, the longitudinal velocity, and the yaw rate of the vehicle during driving can be estimated using an Extended Kalman Filter (EKF) method based on the road surface information, the operating information, and the state-space equation. For example, the state equation and the measurement equation of the vehicle model can be incorporated into the EKF filtering process. In addition, state variables are selected as the center of mass sideslip angle, the longitudinal velocity, and the yaw rate, and an output variable is the lateral acceleration, and correspondingly an initial value of a measurement noise covariance matrix and an initial value of an error covariance matrix are estimated. Therefore, by the above state equation and measurement equation, state variables at different time points are observed. A special weight value is assigned to estimate a true state of the vehicle, which makes estimation results of the center of mass sideslip angle, the longitudinal velocity, and the yaw rate of the vehicle more accurate.

The Extended Kalman Filter includes a design of a nonlinear state observation model. Quantities to be observed include the lateral velocity and the yaw rate. A measurement vector is composed of measured values of sensors, which may include the lateral velocity and the yaw rate. It should be noted that a working principle of the extended Kalman filter is basically the same as that of a classical Kalman filter. That is, based on a linear minimum variance estimation theory, the required signal is estimated from measurement related to an extracted signal through a recursive algorithm. In the whole working process, the EKF algorithm mainly uses the state equation, the measurement equation, statistical properties of white noise excitation, and statistical properties of measurement errors. In addition, unlike the Kalman filter, the EKF algorithm can simply linearize the nonlinear model and apply the nonlinear model to nonlinear systems by performing Taylor expansion on a nonlinear function near a best estimation point and discarding higher-order components.

According to some embodiments of the present disclosure, the method for estimating the lateral velocity of the vehicle further includes determining a tire slip angle based on the center of mass sideslip angle.

Specifically, lateral operation stability of the vehicle is also related to the tire sideslip angle. When determining the tire sideslip angle based on the center of mass sideslip angle, for example, the lateral velocity and the longitudinal velocity of the vehicle can be obtained by integrating the vehicle's acceleration. The center of mass sideslip angle can then be obtained by dividing the lateral velocity by the longitudinal velocity, and subsequently, the tire sideslip angle can be obtained, thereby achieving vehicle stability control.

According to some embodiments of the present disclosure, the obtaining the road surface information of the road surface where the vehicle is located includes: obtaining image information of the road surface where the vehicle is located; and determining the road surface information of the road surface where the vehicle is located based on the image information and a tilt angle output by an inertial sensor disposed on the vehicle. The road surface information includes a road surface slope.

Specifically, when obtaining the road surface information of the road surface where the vehicle is located, image information of the road surface where the vehicle is located may be obtained. For example, the image information of the road surface where the vehicle is located may be obtained by capturing the road surface using a vehicle body camera. After obtaining the image information, the road surface information of the road surface where the vehicle is located can be determined based on the image information and the tilt angle. The road surface information may include the road surface slope. In addition, the inertial sensor can be disposed on the vehicle, and an angle between the vehicle and a horizontal plane can be obtained by the inertial sensor. That is, the tilt angle can be obtained by the inertial sensor disposed on the vehicle, thereby increasing the road surface information. In this way, the accuracy of determining the lateral velocity of the vehicle under complex operation conditions can be improved and the computational efficiency can be enhanced.

The estimation method of the present disclosure is described below with reference to FIG. 2.

As a specific example, the method for estimating the lateral velocity of the vehicle according to the present disclosure may include operations at blocks.

At block S101, image information of the road surface where the vehicle is located is obtained.

At block S102, the road surface information of the road surface where the vehicle is located is determined based on the image information and a tilt angle output by an inertial sensor disposed on the vehicle.

At block S103, operating information of the vehicle is obtained.

At block S104, a state-space equation corresponding to the nonlinear vehicle model is determined.

At block S105, the center of mass sideslip angle, the longitudinal velocity, and the yaw rate of the vehicle are estimated using an extended Kalman filter method based on the road surface information, the operating information, and the state-space equation.

At block S 106, the lateral velocity of the vehicle is determined based on the center of mass sideslip angle, the longitudinal velocity, and the yaw rate.

To sum up, with the method for estimating the lateral velocity of the vehicle according to the embodiment of the present disclosure, the road surface information of the road surface where the vehicle is located and the operating information of the vehicle are obtained. Then, the center of mass sideslip angle, the longitudinal velocity, and the yaw rate of the vehicle are estimated based on the road surface information, the operating information, and the nonlinear vehicle model. Finally, the lateral velocity of the vehicle is determined based on the center of mass sideslip angle, the longitudinal velocity, and the yaw rate. Therefore, this method can improve the accuracy of determining the lateral velocity of the vehicle under complex operation conditions, and enhance the computational efficiency.

Corresponding to the above embodiments, a computer-readable storage medium is further provided according to the present disclosure.

The computer-readable storage medium according to the embodiment of the present disclosure has a program stored thereon. The program is configured to, when executed by a processor, implement the method for estimating the lateral velocity of the vehicle according to the above.

With the computer-readable storage medium according to the embodiment of the present disclosure, by implementing the above-described method for estimating the lateral velocity of the vehicle, the accuracy of determining the lateral velocity of the vehicle under complex operation conditions can be improved, and the computational efficiency can be enhanced.

Corresponding to the above embodiments, a vehicle is further provided according to the present disclosure.

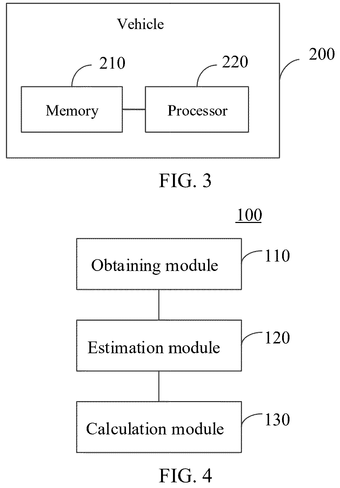

As illustrated in FIG. 3, a vehicle 200 is provided according to an embodiment of the present disclosure. The vehicle 200 includes: a memory 210; a processor 220; and a program stored on the memory 210 and executable on the processor 220. The processor 220 is configured to, when executing the program, implement the method for estimating the lateral velocity of the vehicle according to the above.

With the vehicle according to the embodiment of the present disclosure, by performing the method for estimating the lateral velocity of the vehicle described above, the accuracy of determining the lateral velocity of the vehicle under complex operation conditions can be improved, and the computational efficiency can be enhanced.

Corresponding to the above embodiments, an apparatus for estimating a lateral velocity of a vehicle is further provided according to the present disclosure.

As illustrated in FIG. 4, an apparatus for estimating a lateral velocity of a vehicle 100 according to an embodiment of the present disclosure includes an obtaining module 110, an estimation module 120, and a calculation module 130.

The obtaining module 110 is configured to obtain road surface information of the road surface where the vehicle is located and operating information of the vehicle. The estimation module 120 is configured to estimate a center of mass sideslip angle, a longitudinal velocity, and a yaw rate of the vehicle based on the road surface information, the operating information, and a nonlinear vehicle model. The calculation module 130 is configured to determine a lateral velocity of the vehicle based on the center of mass sideslip angle, the longitudinal velocity, and the yaw rate.

According to some embodiments of the present disclosure, the road surface information includes a road surface slope, and the operating information includes a front wheel steering angle and a rear wheel steering angle of the vehicle.

According to some embodiments of the present disclosure, the estimation module 120 is configured to estimate the center of mass sideslip angle, the longitudinal velocity, and the yaw rate of the vehicle based on the road surface information, the operating information, and the nonlinear vehicle model. Specifically, the estimation module 120 is configured to: determine the state-space equation corresponding to the nonlinear vehicle model; and estimate the center of mass sideslip angle, the longitudinal velocity, and the yaw rate of the vehicle using the extended Kalman filter method based on the road surface information, the operating information, and the state-space equation.

According to some embodiments of the present disclosure, the state-space equation includes the state equation and the measurement equation. The state equation is expressed by the following formulas:

$$\begin{bmatrix} \dot{\beta} \\ \dot{\gamma} \end{bmatrix} = \begin{bmatrix} -\dfrac{C_f + C_r}{mv_x} & \dfrac{C_r l_r - C_f l_f}{mv_x^2} - 1 \\ -\dfrac{C_f l_f - C_r l_r}{I_{zz}} & -\dfrac{C_f l_f^2 + C_r l_r^2}{I_{zz} v_x} \end{bmatrix} \begin{bmatrix} \beta \\ \gamma \end{bmatrix} + \begin{bmatrix} \dfrac{C_f}{mv_x} & \dfrac{C_r}{mv_x} \\ \dfrac{C_f l_f}{I_{zz}} & -\dfrac{C_r l_r}{I_{zz}} \end{bmatrix} \begin{bmatrix} \delta_f \\ \delta_r \end{bmatrix} + \begin{bmatrix} -g\sin(\text{Slope}) \\ 0 \end{bmatrix},$$

$$\dot{\omega} = C_1 \omega + C_2 \beta - C_3 \delta_f,$$

$$\dot{\beta} = C_4 \omega + C_5 \beta - C_6 \delta_f,$$

$$\dot{v}_x = \omega \beta v_x + a_x,$$

where $\dot{\beta}$ is a derivative of the center of mass sideslip angle, $\dot{\gamma}$ is a derivative of a wheel camber angle, $C_f$ is a cornering stiffness of a front axle, $C_r$ is a cornering stiffness of a rear axle, m is a total mass of the vehicle, $v_x$ is the longitudinal velocity, $l_f$ is a distance from a center of mass to the front axle, $l_r$ is a distance from the center of mass to the rear axle, $I_{zz}$ is a yaw moment of inertia of the vehicle about a z-axis, $\beta$ is the center of mass sideslip angle, $\gamma$ is the wheel camber angle, $\delta_f$ is a front wheel steering angle, $\delta_r$ is a rear wheel steering angle, g is a gravitational acceleration, Slope is a road surface slope, $\dot{v}_x$ is a derivative of the longitudinal velocity, $\dot{\omega}$ is a derivative of the yaw rate, $C_1$, $C_2$, $C_3$, $C_4$, $C_5$, and $C_6$ are coefficients, $\omega$ is the yaw rate, $a_x$ is a longitudinal acceleration, and $a_y$ is a lateral acceleration.

According to some embodiments of the present disclosure, the measurement equation is expressed by the following formula:

$$\begin{bmatrix} a_y \\ \gamma \end{bmatrix} = \begin{bmatrix} \dfrac{C_f + C_r}{m} & \dfrac{C_r l_r - C_f l_f}{mv_x} \\ 0 & 1 \end{bmatrix} \begin{bmatrix} \beta \\ \gamma \end{bmatrix} + \begin{bmatrix} -\dfrac{C_f}{m} & -\dfrac{C_r}{m} \\ 0 & 0 \end{bmatrix} \begin{bmatrix} \delta_f \\ \delta_r \end{bmatrix} + \begin{bmatrix} -g\,sin(Slope) \\ 0 \end{bmatrix}$$

where $a_y$ is the lateral acceleration, $\gamma$ is the wheel camber angle, $C_f$ is the cornering stiffness of the front axle, $C_r$ is the cornering stiffness of the rear axle, m is the total vehicle mass, $l_f$ is the distance from the center of mass to the front axle, $l_r$ is the distance from the center of mass to the rear axle, $\beta$ is the center of mass sideslip angle, $\delta_f$ is the front wheel steering angle, $\delta_r$ is the rear wheel steering angle, g is the gravitational acceleration, and Slope is the road surface slope.

According to some embodiments of the present disclosure, the calculation module 130 is further configured to determine the tire sideslip angle based on the center of mass sideslip angle.

According to some embodiments of the present disclosure, the obtaining module 110 is configured to obtain the road surface information of the road surface where the vehicle is located. Specifically, the obtaining module 110 is configured to: obtain the image information of the road surface where the vehicle is located; and determine the road surface information of the road surface where the vehicle is located based on the image information and the tilt angle output by the inertial sensor disposed on the vehicle. The road surface information includes the road surface slope.

It should be noted that for details not disclosed in the apparatus for estimating the lateral velocity of the vehicle according to the embodiments of the present disclosure, reference can be made to the details disclosed in the method for estimating the lateral velocity of the vehicle according to the embodiments of the present disclosure, and thus details thereof will be omitted here.

With the apparatus for estimating the lateral velocity of the vehicle according to the embodiment of the present disclosure, the obtaining module is configured to obtain the road surface information of the road surface where the vehicle is located and the operating information of the vehicle. The estimation module is configured to estimate the center of mass sideslip angle, the longitudinal velocity, and the yaw rate of the vehicle based on the road surface information, the operating information, and the nonlinear vehicle model. The calculation module is configured to determine the lateral velocity of the vehicle based on the center of mass sideslip angle, the longitudinal velocity, and the yaw rate. Therefore, the apparatus can improve the accuracy of determining the lateral velocity of the vehicle under complex operation conditions, and improve the computational efficiency.

It should be noted that, the logical and/or steps described in the flowchart or otherwise depicted herein, for example, may be considered as a fixed sequence list of executable instructions for implementing logical functions, and may be specifically implemented in any computer-readable medium for use for, or in conjunction with, an instruction execution system, apparatus, or device, such as a computer-based system, a system including a processor, or other systems that may fetch and execute instructions from the instruction execution system, apparatus, or device. For purposes of this disclosure, the "computer-readable medium" may be any apparatus that can include, store, communicate, propagate, or transport the program for use for or in conjunction with the instruction execution system, apparatus, or device. More specific examples (a non-exhaustive list) of the computer-readable medium include: an electrical connection portion (electronic devices) having one or more of wires, a portable computer disk cartridge(a magnetic device), a random access memory (RAM), a read-only memory (ROM), an erasable, programmable, read-only memory (EPROM or Flash memory), an optical apparatus, and a portable compact disc read-only memory (CD-ROM). In addition, the computer-readable mediums may even be paper or other suitable mediums on which the program may be printed, since the program may be obtained electronically by, for example, optical scanning of the paper or other mediums followed by editing, interpretation or other suitable processing if necessary, and then stored in a computer memory.

It should be understood that each part of the present disclosure can be implemented in hardware, software, firmware or any combination thereof. In the above embodiments, multiple steps or methods can be implemented using software or firmware stored in a memory and executed by a suitable instruction execution system. For example, when implemented in hardware, as in another embodiment, it can be implemented by any one or combination of the following technologies known in the art: a discrete logic circuit having logic gate circuits for implementing logic functions on data signals, an application-specific integrated circuit with suitable combined logic gates, a Programmable Gate Array (PGA), a Field Programmable Gate Array (FPGA), etc.

In the description of the present disclosure, the description with reference to the terms "some embodiments", "some embodiments", "an example", "a specific example", or "some examples", etc., means that specific features, structures, materials, or characteristics described in conjunction with the embodiment(s) or example(s) are included in at least one embodiment or example of the present disclosure. The appearances of the above phrases in various places throughout this specification are not necessarily referring to the same embodiment or example. In addition, the particular features, structures, materials, or characteristics described may be combined in any suitable manner in any one or more embodiments or examples.

In addition, the terms such as "first", "second" are only used for descriptive purposes, and cannot be understood as indicating or implying relative importance or implicitly indicating the number of indicated technical features. Therefore, the features associated with "first" and "second" may explicitly or implicitly include at least one of the features. In the description of the present disclosure, "plurality" means at least two, such as two, three, unless otherwise specifically defined.

In the present disclosure, unless otherwise clearly specified and limited, terms, such as "mounting", "connect", "connect to", "fixed to", or the like, should be understood in a broad sense. For example, it may be a fixed connection or a detachable connection or connection as one piece; mechanical connection or electrical connection; direct connection or indirect connection through an intermediate; internal communication of two components or the interaction relationship between two components, unless otherwise clearly limited. For those skilled in the art, specific meanings of the above-mentioned terms in the present disclosure can be understood according to specific circumstances.

Although the embodiments of the present disclosure have been shown and described above, it should be understood that the above-mentioned embodiments are exemplary and should not be construed as limiting the present disclosure. Those skilled in the art can make changes, modifications, substitutions, and alternations to the above-mentioned embodiments within the scope of the present disclosure.

**Claims**

1.  A method for estimating a lateral velocity of a vehicle, comprising:

    obtaining road surface information of a road surface where the vehicle is located and operating information of the vehicle;
    estimating a center of mass sideslip angle, a longitudinal velocity, and a yaw rate of the vehicle based on the road surface information, the operating information, and a nonlinear vehicle model; and
    determining the lateral velocity of the vehicle based on the center of mass sideslip angle, the longitudinal velocity, and the yaw rate.

2.  The method according to claim 1, wherein the road surface information comprises a road surface slope, and the operating information comprises a front wheel steering angle and a rear wheel steering angle of the vehicle.

3.  The method according to claim 1 or 2, wherein said estimating the center of mass sideslip angle, the longitudinal velocity, and the yaw rate of the vehicle based on the road surface information, the operating information, and the nonlinear vehicle model comprises:

    determining a state-space equation corresponding to the nonlinear vehicle model; and
    estimating the center of mass sideslip angle, the longitudinal velocity, and the yaw rate of the vehicle using an extended Kalman filter method based on the road surface information, the operating information, and the state-space equation.

4.  The method according to claim 3, wherein the state-space equation comprises a state equation and a measurement equation, wherein the state equation is expressed by the following formulas:

$$
\begin{bmatrix} \dot{\beta} \\ \dot{\gamma} \end{bmatrix} =
\begin{bmatrix} -\dfrac{C_f + C_r}{mv_x} & \dfrac{C_r l_r - C_f l_f}{mv_x^2} - 1 \\ -\dfrac{C_f l_f - C_r l_r}{I_{zz}} & -\dfrac{C_f l_f^2 + C_r l_r^2}{I_{zz} v_x} \end{bmatrix}
\begin{bmatrix} \beta \\ \gamma \end{bmatrix} +
\begin{bmatrix} \dfrac{C_f}{mv_x} & \dfrac{C_r}{mv_x} \\ \dfrac{C_f l_f}{I_{zz}} & -\dfrac{C_r l_r}{I_{zz}} \end{bmatrix}
\begin{bmatrix} \delta_f \\ \delta_r \end{bmatrix} +
\begin{bmatrix} -g\sin(\text{Slope}) \\ 0 \end{bmatrix}
$$

$$
\dot{\omega} = C_1 \omega + C_2 \beta - C_3 \delta_f
$$

$$
\dot{\beta} = C_4 \omega + C_5 \beta - C_6 \delta_f
$$

$$
\dot{v}_x = \omega \beta v_x + a_x
$$

where $\dot{\beta}$ is a derivative of the center of mass sideslip angle, $\dot{\gamma}$ is a derivative of a wheel camber angle, $C_f$ is a cornering stiffness of a front axle, $C_r$ is a cornering stiffness of a rear axle, m is a total mass of the vehicle, $v_x$ is the longitudinal velocity, $l_f$ is a distance from a center of mass to the front axle, $l_r$ is a distance from the center of mass to the rear axle, $I_{zz}$ is a yaw moment of inertia of the vehicle about a z-axis, $\beta$ is the center of mass sideslip angle, $\gamma$ is the wheel camber angle, $\delta_f$ is a front wheel steering angle, $\delta_r$ is a rear wheel steering angle, g is a gravitational acceleration, Slope is a road surface slope, $\dot{v}_x$ is a derivative of the longitudinal velocity, $\dot{\omega}$ is a derivative of the yaw rate, $C_1, C_2, C_3, C_4, C_5$, and $C_6$ are coefficients, $\omega$ is the yaw rate, $a_x$ is a longitudinal acceleration, and $a_y$ is a lateral acceleration.

5.  The method according to claim 4, wherein the measurement equation is expressed by the following formula:

$$
\begin{bmatrix} a_y \\ \gamma \end{bmatrix} =
\begin{bmatrix} \dfrac{C_f + C_r}{m} & \dfrac{C_r l_r - C_f l_f}{mv_x} \\ 0 & 1 \end{bmatrix}
\begin{bmatrix} \beta \\ \gamma \end{bmatrix} +
\begin{bmatrix} -\dfrac{C_f}{m} & -\dfrac{C_r}{m} \\ 0 & 0 \end{bmatrix}
\begin{bmatrix} \delta_f \\ \delta_r \end{bmatrix} +
\begin{bmatrix} -g\sin(\text{Slope}) \\ 0 \end{bmatrix}
$$

where $a_y$ is the lateral acceleration, $\gamma$ is the wheel camber angle, $C_f$ is the cornering stiffness of the front axle, $C_r$ is the cornering stiffness of the rear axle, m is the total vehicle mass, $l_f$ is the distance from the center of mass to the front axle,

$I_r$ is the distance from the center of mass to the rear axle, $\beta$ is the center of mass sideslip angle, $\delta_f$ is the front wheel steering angle, $\delta_r$ is the rear wheel steering angle, g is the gravitational acceleration, and Slope is the road surface slope.

6. The method according to claim 1, further comprising:
   determining a tire slip angle based on the center of mass sideslip angle.

7. The method according to claim 1, wherein said obtaining the road surface information of the road surface where the vehicle is located comprises:

   obtaining image information of the road surface where the vehicle is located; and
   determining the road surface information based on the image information and a tilt angle output by an inertial sensor disposed on the vehicle, wherein the road surface information comprises a road surface slope.

8. A computer-readable storage medium, having a program stored thereon, wherein the program is configured to, when executed by a processor, implement the method for estimating the method for estimating the lateral velocity of the vehicle according to any one of claims 1 to 7.

9. A vehicle, comprising:

   a memory;
   a processor; and
   a program stored on the memory and executable on the processor, wherein the processor is configured to, when executing the program, implement the method for estimating the lateral velocity of the vehicle according to any one of claims 1 to 7.

10. An apparatus for estimating a lateral velocity of a vehicle, comprising:

    an obtaining module configured to obtain road surface information of the road surface where the vehicle is located and operating information of the vehicle;
    an estimation module configured to estimate a center of mass sideslip angle, a longitudinal velocity, and a yaw rate of the vehicle based on the road surface information, the operating information, and a nonlinear vehicle model; and
    a calculation module configured to determine a lateral velocity of the vehicle based on the center of mass sideslip angle, the longitudinal velocity, and the yaw rate.

Obtaining road surface information of a road surface where the vehicle is located and operating information of the vehicle — S1

Estimating a center of mass sideslip angle, a longitudinal velocity, and a yaw rate of the vehicle based on the road surface information, the operating information, and a nonlinear vehicle model — S2

Determining the lateral velocity of the vehicle based on the center of mass sideslip angle, the longitudinal velocity, and the yaw rate — S3

FIG. 1

Obtaining image information of the road surface where the vehicle is located — S101

Determining the road surface information based on the image information and a tilt angle output by an inertial sensor disposed on the vehicle — S102

Obtaining operating information of the vehicle — S103

Determining a state-space equation corresponding to the nonlinear vehicle model — S104

Estimating the center of mass sideslip angle, the longitudinal velocity, and the yaw rate of the vehicle using an extended Kalman filter method based on the road surface information, the operating information, and the state-space equation — S105

Determining the lateral velocity of the vehicle based on the center of mass sideslip angle, the longitudinal velocity, and the yaw rate — S106

FIG. 2

Vehicle

210

220

200

Memory

Processor

FIG. 3

100

Obtaining module

110

Estimation module

120

Calculation module

130

FIG. 4

## INTERNATIONAL SEARCH REPORT

| International application No. |
|---|
| **PCT/CN2024/080381** |

### A. CLASSIFICATION OF SUBJECT MATTER

B60W40/109(2012.01)i; B60W50/00(2006.01)i

According to International Patent Classification (IPC) or to both national classification and IPC

### B. FIELDS SEARCHED

Minimum documentation searched (classification system followed by classification symbols)

IPC:B60W,B60T

Documentation searched other than minimum documentation to the extent that such documents are included in the fields searched

Electronic data base consulted during the international search (name of data base and, where practicable, search terms used)

CNTXT; DWPI; VEN; CNKI: 横向速度, 质心侧偏角, 纵向速度, 横摆角, 估计, lateral, speed, centroid, side, deflection, angle, longitudinal, yaw, estimat+

### C. DOCUMENTS CONSIDERED TO BE RELEVANT

| Category* | Citation of document, with indication, where appropriate, of the relevant passages | Relevant to claim No. |
|---|---|---|
| Y | CN 102556075 A (SOUTHEAST UNIVERSITY) 11 July 2012 (2012-07-11) description, paragraphs 102-212, and figures 1-4 | 1-10 |
| Y | CN 104890674 A (SHANDONG UNIVERSITY OF TECHNOLOGY) 09 September 2015 (2015-09-09) claim 2, description, paragraphs 2 and 11-13, and figure 1 | 1-10 |
| Y | CN 113682282 A (CHINA FAW CO., LTD.) 23 November 2021 (2021-11-23) description, paragraphs 43-166, and figures 1-10 | 8,9 |
| PX | CN 116494994 A (ZHEJIANG GEELY AUTOMOBILE HOLDINGS LTD. et al.) 28 July 2023 (2023-07-28) claims 1-10 | 1-10 |
| A | CN 105151047 A (JILIN UNIVERSITY) 16 December 2015 (2015-12-16) entire document | 1-10 |
| A | CN 108749817 A (GM GLOBAL TECHNOLOGY OPERATIONS LLC) 06 November 2018 (2018-11-06) entire document | 1-10 |

☑ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **11 May 2024** | **23 May 2024** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
|---|
| **PCT/CN2024/080381** |

**C.   DOCUMENTS CONSIDERED TO BE RELEVANT**

| Category* | Citation of document, with indication, where appropriate, of the relevant passages | Relevant to claim No. |
|---|---|---|
| A | JP 2020094926 A (TOYOTA CENTRAL R&D LABS INC.) 18 June 2020 (2020-06-18) entire document | 1-10 |
| A | US 2010131144 A1 (GM GLOBAL TECHNOLOGY OPERATIONS, INC.) 27 May 2010 (2010-05-27) entire document | 1-10 |

Form PCT/ISA/210 (second sheet) (July 2022)

**INTERNATIONAL SEARCH REPORT**
Information on patent family members

International application No.

**PCT/CN2024/080381**

| Patent document cited in search report | | | Publication date (day/month/year) | Patent family member(s) | | | Publication date (day/month/year) |
|---|---|---|---|---|---|---|---|
| CN | 102556075 | A | 11 July 2012 | None | | | |
| CN | 104890674 | A | 09 September 2015 | None | | | |
| CN | 113682282 | A | 23 November 2021 | None | | | |
| CN | 116494994 | A | 28 July 2023 | None | | | |
| CN | 105151047 | A | 16 December 2015 | None | | | |
| CN | 108749817 | A | 06 November 2018 | DE | 102018107867 | A1 | 11 October 2018 |
| | | | | DE | 102018107867 | B4 | 30 June 2022 |
| | | | | US | 10046770 | B1 | 14 August 2018 |
| JP | 2020094926 | A | 18 June 2020 | JP | 7206875 | B2 | 18 January 2023 |
| US | 2010131144 | A1 | 27 May 2010 | US | 8050838 | B2 | 01 November 2011 |

Form PCT/ISA/210 (patent family annex) (July 2022)

## REFERENCES CITED IN THE DESCRIPTION

**Patent documents cited in the description**

- CN 202310493324